# EUROPÄISCHE PATENTSCHRIFT

(11) **EP 0 618 011 B1**
(45) Veröffentlichungstag und Bekanntmachung des Hinweises auf die Patenterteilung: **12.06.1996**
(21) Anmeldenummer: 94104055.2
(22) Anmeldetag: 16.03.1994
(51) Int. Cl.: B03B 9/06, B09B 5/00

(54) **Einrichtung zur Entsorgung alter Fenster**
Apparatus for the disposal of old windows
Dispositif d'élimination de vieilles fenêtres

(30) Priorität: 27.03.1993 DE 4310073
(43) Veröffentlichungstag der Anmeldung: 05.10.1994
(73) Patentinhaber: Achterkerke, Heinz-Egon, Dipl.-Ing., D-38104 Braunschweig (DE)
(72) Erfinder: Achterkerke, Heiz-Egon, Dipl.-Ing., D-38104 Braunschweig (DE); Fischer, Reinhard, D-38667 Bad Harzburg (DE); Köcher, Helmut, Dipl.-Ing., D-38114 Braunschweig (DE); Kopowski, Eckart, Dr.-Ing., D-38102 Braunschweig (DE)
(74) Vertreter: Gramm, Werner, Prof., Dipl.-Ing.

(56) Entgegenhaltungen:
- EP-A- 0 249 094
- CH-A- 400 046
- GB-A- 2 070 623
- STICHTING C.R.O.W. WERKGROEP A1 "BOUW- EN SLOOPAFVAL": 'Resten zijn geen afval (meer) - Puingranulaten'; Publikatie 12, ISBN 90-6628-072-7, Seiten 1-24

## Beschreibung

Die Erfindung betrifft eine Einrichtung zur Entsorgung alter verglaster Fenster.

Bisher werden die von einer Baustelle mitgebrachten alten Fenster in Container geworfen und auf die Müllhalde oder dergleichen gefahren. Da die Fensterrahmen im Container ungeordnet übereinander liegen, ergeben sich erhebliche Toträume, die hohe Containerkapazität erfordern, die die Entsorgung verteuert.

Soll das Fensterglas von dem Rahmen getrennt werden, müßte dies zur Zeit in aufwendiger Handarbeit vorgenommen werden, was die Entsorgungskosten weiter ansteigen läßt.

Die schweizer Patentschrift 400 046 offenbart eine Einrichtung zur Zerkleinerung von gegebenenfalls auch sperrigem Müll. Diese vorbekannte Einrichtung weist einen ortsfest angeordneten, mit einem Scherbalken versehenen Rahmen sowie einen zweiten, ebenfalls mit einem Scherbalken versehenen Rahmen auf, der mit seiner unteren Kante im Bereich des unteren Endes des ortsfesten Rahmens diesem gegenüber um eine horizontale Achse verschwenkbar gelagert ist und über eine Antriebsvorrichtung kontinuierlich rhythmisch hin- und hergeschwenkt wird. Die oberen Rahmenteile bilden Pressplatten, zwischen denen der Müll zerdrückt bzw. zerbrochen wird.

Der Erfindung liegt die Aufgabe zugrunde, eine die Fensterentsorgung vereinfachende Einrichtung zu entwickeln.

Diese Aufgabe wird erfindungsgemäß gelöst durch eine Anlage zur Trennung des Altglases vom zugeordneten Fensterrahmen und zur anschließenden Zerkleinerung des Fensterrahmens, mit folgenden Markmalen:
a) ein Arbeitstisch mit einem sich über seine Länge erstreckenden Förderer zur Aufnahme der nacheinander flach aufgelegten Fensterrahmen;
b) Glasdurchfallöffnungen, die im Arbeitstisch unterhalb des Förderers vorgesehen sind;
c) ein Zertrümmerwerk zum Zerschlagen des Altglases ist oberhalb des Arbeitstisches über den Glasdurchfallöffnungen angeordnet;
d) ein sich auf den Boden stützendes Gerüst, das den Arbeitstisch trägt und unterhalb der Glasdurchfallöffnungen einen Aufnahmeraum für einen Container bildet;
e) eine dem Arbeitstisch nachgeordnete Zerkleinerungsvorrichtung für die angeförderten entglasten Fensterrahmen;
f) unterhalb der Zerkleinerungsvorrichtung ist ein Container zur Aufnahme der zerkleinerten Rahmenteile angeordnet.

Dabei ist es zweckmäßig, wenn der Förderer des Arbeitstisches zumindest zwei sich über die Länge des Arbeitstisches erstreckende, endlos umlaufende und mit Mitnehmern bestückte Ketten aufweist, deren Abstand voneinander kleiner ist als die kleinste Breite der zu entsorgenden Fensterrahmen.

In einer Alternativlösung ist es aber auch möglich, daß der Förderer ein sich über die Breite des Arbeitstisches erstrekkender, durch einen Antrieb über die Länge des Arbeitstisches verschiebbarer Schubbalken ist. Dabei ist es zweckmäßig, wenn am Förderende des Arbeitstisches in den Förderweg ein- bzw. aus dem Förderweg aussteuerbare Anschläge für den vorgeförderten Fensterrahmen vorgesehen sind.

Das Zertrümmerwerk kann ein senkrecht gegen die Rahmenebene gesteuertes Schlagwerkzeug sein, mit dem die Glasscheibe aus dem Rahmen herausgedrückt bzw. herausgeschlagen wird. Es besteht auch die Möglichkeit, den Fensterrahmen zu seiner Entglasung über eine Biegeeinrichtung laufen zu lassen, die den Rahmen verbiegt und dadurch seine Verglasung zerstört. Es kann auch vorgesehen werden, im Bereich des Zertrümmerwerkes den Fensterrahmen auseinander zu reißen, um so die Verglasung zu lösen. In jedem Fall fällt das herausgelöste und zerkleinerte Altglas durch die Glasdurchfallschlitze in den darunter angeordneten Glascontainer, während der so entglaste Fensterrahmen auf dem Arbeitstisch weitertransportiert wird zu der Zerkleinerungsvorrichtung, die eine Schlagschere, eine Säge oder dergleichen sein kann. Der taktweise Vorschub des Förderers erfolgt über eine Steuerung, die über einen mechanischen, optischen, pneumatischen oder elektrischen Sensor die jeweilige Postiion des Fensterrahmens feststellt.

Die am Ende des Arbeitstisches zerkleinerten Rahmenteile werden in den darunter befindlichen zweiten Container abgeworfen, so daß eine Separierung des Altglases von den Rahmenteilen sichergestellt ist.

Die von der Baustelle mitgebrachten Fenster können beim Abladen sofort auf die Aufnahme des Arbeitstisches gelegt und verarbeitet werden. Eine Zwischenlagerung entfällt. Die erfindungsgemäße Einrichtung kann auch auf Großbaustellen eingesetzt werden. Hierfür ist es zweckmäßig, wenn die das Gerüst bildenden Stützen für den Transport der Einrichtung gegen die Unterseite des Arbeitstisches klappbar sind. Dadurch läßt sich die Einrichtung als einteilige Vorrichtung auf einem Lkw transportieren und ermöglicht ein problemloses Aufstellen auf der jeweiligen Baustelle. Um eine gleichmäßige Befüllung der Container zu gewährleisten, ist es vorteilhaft, wenn das Gerüst auf dem Boden verfahrbar ist.

In einer abgewandelten Ausführungsform kann die Zerkleinerungsvorrichtung als Rahmenpresse mit folgenden Merkmalen ausgebildet sein:
a) eine in den Förderweg des Fensterrahmens ragende Prallwand;
b) eine den Fensterrahmen gegen die Prallwand fördernde Einzugsvorrichtung;
c) ein in seiner Ruhestellung außerhalb des Fensterrahmen-Förderweges liegender Preßarm, der innerhalb der Fensterrahmenebene des an der Prallwand anliegenden Fensterrahmens über einen Antrieb aus seiner Ruhestellung verschwenkbar ist gegen den positionierten Fensterrahmen in eine angenähert parallel zur Prallwand liegende Endstellung;
d) eine vor der Prallwand, unterhalb der Einzugsvorrichtung und oberhalb des zweiten Containers vorgesehene Ausfallöffnung für die Rahmenteile.

Beim Einsatz der erfindungsgemäßen Einrichtung läßt sich das Gewicht vom Fensterflügel aufgrund der Entglasung um etwa 50% verringern; dies führt zu einer entsprechenden Reduzierung der Müllgebühr auf der Deponie. Durch die Zerkleinerung der Rahmen läßt sich auch der Stauraum im Container etwa halbieren, so daß sich auch die Abfuhrkosten erheblich verringern. Das separierte, zertrümmerte Glas wird im Glascontainer zur Wiederverwertung transportiert; hierfür wird eine Vergütung gezahlt.

Eine Einrichtung zur Entsorgung alter verglaster Fenster mit einer Anlage zur Trennung des Altglases vom zugeordneten Fensterrahmen kann erfindungsgemäß auch durch folgende Merkmale gekennzeichnet sein:
a) Ein Arbeitstisch mit einem sich über seine Länge erstreckenden Förderer zur Aufnahme der nacheinander flach aufgelegten Fensterrahmen;
b) Glasdurchfallöffnungen, die im Arbeitstisch unterhalb des Förderers vorgesehen sind;
c) ein Zertrümmerwerk zum Zerschlagen des Altglases ist oberhalb des Arbeitstisches über den Glasdurchfallöffnungen angeordnet;
d) eine unterhalb des Arbeitstisches vorgesehene Auffangeinrichtung für das zerschlagene, durch die Glasdurchfallöffnungen hindurchfallende Altglas;
e) das Zertrümmerwerk ist ein Schlagwerk, das rotierend angetriebene Schlaghebel aufweist;
f) die Schlaghebel sind als zweiarmige Hebel ausgebildet und an einer rotierend angetriebenen Scheibe so angelenkt, daß der wirksame Schlagarm dem Radius der Scheibe um einen Winkel nacheilt;
g) oberhalb des Förderers sind Niederhalter angeordnet, die sich von dem Einlaufbereich vor dem Zertrümmerwerk und durch dieses hindurch bis in den Auslaufbereich hinter dem Zertrümmerwerk erstrecken.

Eine derartige Einrichtung kann unabhängig davon arbeiten, ob ihr eine Rahmenzerkleinerungsvorrichtung unmittelbar nachgeordnet ist bzw. von der Konstruktion einer derartigen Rahmenzerkleinerungsvorrichtung. Die unterhalb des Arbeitstisches vorgesehene Auffangeinrichtung für das zerschlagene Altglas kann zum Beispiel auch ein Förderband sein. Um zu verhindern, daß sich die Schlaghebel beim Auftreffen auf hartes Material festsetzen, ist die vorstehend beschriebene besondere Anlenkung der Schlaghebel vorgesehen. Hierdurch wird eine Blockierung der Schlaghebel durch eine Art Kniehebeleffekt wirksam verhindert. Dabei ist es vorteilhaft, wenn die Schlaghebel jeweils als Schlaghebelpaar ausgebildet sind, dessen beiden Schlaghebel unabhängig voneinander verschwenkbar sind. Wenn der eine Schlaghebel gerade noch den Fensterrahmen trifft, ist sichergestellt, daß der zweite dem Schlaghebelpaar zugeordnete Schlaghebel das Glas am Rand des Fensterrahmens herausschlägt.

Es ist vorteilhaft, wenn das Schlagwerk bezogen auf die Förderrichtung der Fensterrahmen als mitlaufendes Schlagwerk arbeitet. Die Schlaghebel treiben dabei den verglasten Fensterrahmen quasi vor sich her. Insbesondere bei thermopenverglasten Rahmen ergibt sich ein verhältnismäßig hoher Rahmenüberstand, der bei dem in Förderrichtung gesehen hinteren Rahmenholm zu einem Schlagschatten des Schlagwerks führt. Um den dadurch stehenbleibenden Glasrand dennoch herausschlagen zu können, ist es vorteilhaft, wenn dem Schlagwerk ein zweites, gegenläufig angetriebenes Schlagwerk vor- oder nachgeschaltet ist. Für beide Schlagwerke kann ein gemeinsamer Antrieb vorgesehen werden.

Es ist vorteilhaft, wenn dem Arbeitstisch hinter dem genannten Auslaufbereich eine den entglasten Fensterrahmen übernehmende Rutsche nachgeordnet ist, die den Fensterrahmen auf einem Längsförderer abstellt, der den entglasten Fensterrahmen einer Rahmenzerkleinerungsvorrichtung zuführt. Diese Konstruktion hat den Vorteil, daß unabhängig von der jeweiligen Rahmengröße immer eine definierte untere Anlage gegeben ist.

Die Rahmenzerkleinerungsvorrichtung kann einen den Fensterrahmen aufnehmenden und sich in dessen Förderrichtung verjüngenden Einzugskeil aufweisen, der in einem die Höhe und Breite des zusammengepeßten Rahmenpaketes bestimmenden Austrittsspalt mündet. Dabei ist es vorteilhaft, wenn der Einzugskeil bodenseitig von dem genannten Längsförderer und im Schrägbereich von einer Einzugseinrichtung gebildet ist.

Die Einzugseinrichtung kann - ebenso wie der genannte Längsförderer - eine mit Mitnehmern bestückte Kette sein, die mit einer gegenüber dem Längsförderer langsameren Geschwindigkeit umläuft. Hierbei ist es vorteilhaft, wenn der Antrieb der Einzugseinrichtung von dem Antrieb des Längsförderers über ein zwischengeschaltetes Ausgleichsgetriebe erfolgt. Dieses Ausgleichsgetriebe kann ein auf einer Schwinge angeordnetes Kettengetriebe sein und dient unter bestimmten Voraussetzungen zur Geschwindigkeitsverstellung.

Die Gesamtanlage, insbesondere aber die Einrichtung zum Zertrümmern des Glases kann innerhalb eines an beliebiger Stelle aufstellbaren Containers oder dergleichen installiert werden, so daß man eine mobile Anlage erhält. Unter Berücksichtigung der hohen Schallschutzbestimmungen in Wohngebieten läßt sich dadurch eine durch den Container insbesondere schallmäßig abgekapselte Ausführungsform einsetzen.

Weitere Merkmale der Erfindung sind Gegenstand der Unteransprüche und werden in Verbindung mit weiteren Vorteilen der Erfindung anhand von Ausführungsbeispielen näher erläutert.

In der Zeichnung sind einige als Beispiele dienende Ausführungsformen der Erfindung schematisch dargestellt. Es zeigen:
- **Figur 1** -: eine Einrichtung zur Entsorgung alter verglaster Fenster in Stirnansicht;
- **Figur 2** -: Teile der Einrichtung gemäß Figur 1 in Draufsicht;
- **Figur 3 -**: in einer Darstellung gemäß Figur 1 eine abgewandelte Ausfühungsform für eine Glastrenneinrichtung;
- **Figur 4 -**: die Glastrenneinrichtung gemäß Figur 3 in Draufsicht;
- **Figur 5 -**: in einer Darstellung gemäß Figur 3 eine als Rahmenpresse ausgebildete Zerkleinerungsvorrichtung;
- **Figur 6 -**: die Zerkleinerungsvorrichtung gemäß Figur 5 in Draufsicht;
- **Figur 7 -**: in Draufsicht fünf schematisch dargestellte Arbeitsschritte der Zerkleinerungsvorrichtung gemäß den Figurn 5 und 6;
- **Figur 8 -**: in gegenüber Figur 4 vergrößertem Maßstab und schematischer Darstellung einen Längsschnitt durch ein Zertrümmerwerk in abgewandelter Ausführungsform;
- **Figur 9 -**: in gegenüber Figur 8 vergrößertem Maßstab in Stirnansicht und zum Teil im Querschnitt die Anlenkung von zwei zweiarmigen Hebeln an einer Scheibe eines Schlagwerkes;
- **Figur 10 -**: in Draufsicht ein an einer Scheibe des Schlagwerkes angelenktes Schlaghebelpaar;
- **Figur 11 -**: in Stirnansicht eine dem Arbeitstisch nachgeschaltete Rutsche für den entglasten Fensterrahmen und einen den abgestellten Fensterrahmen aufnehmenden Längsförderer;
- **Figur 12 -**: die Darstellung gemäß Figur 11 in Seitenansicht mit einer Rahmenzerkleinerungsvorrichtung;
- **Figur 13 -**: in vergrößertem Maßstab die Einzelheit X aus Figur 12 und
- **Figur 14 -**: in vergrößertem Maßstab ein Detail aus der Rückansicht der Darstellung gemäß Figur 12.

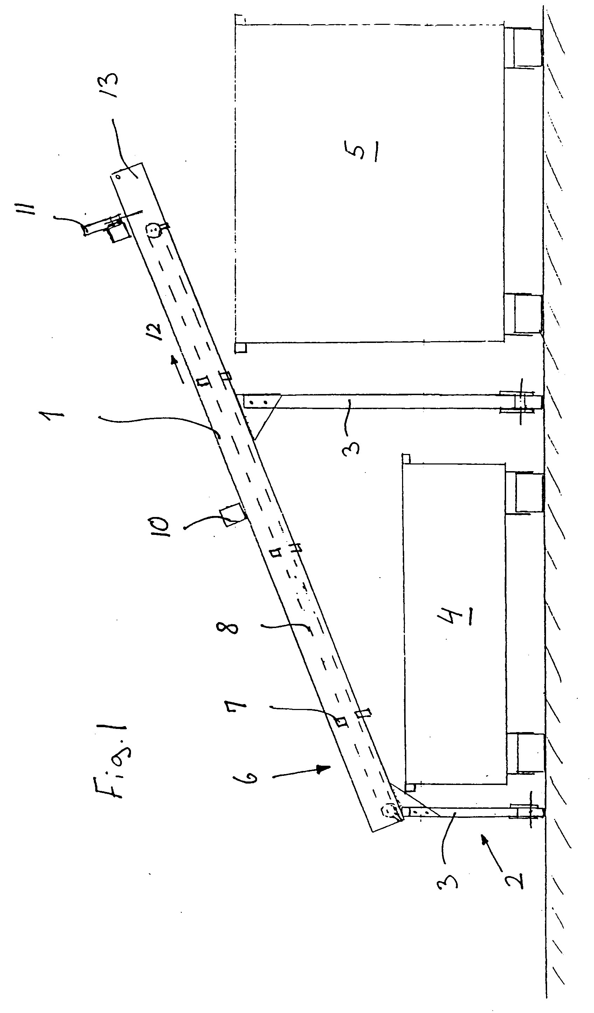

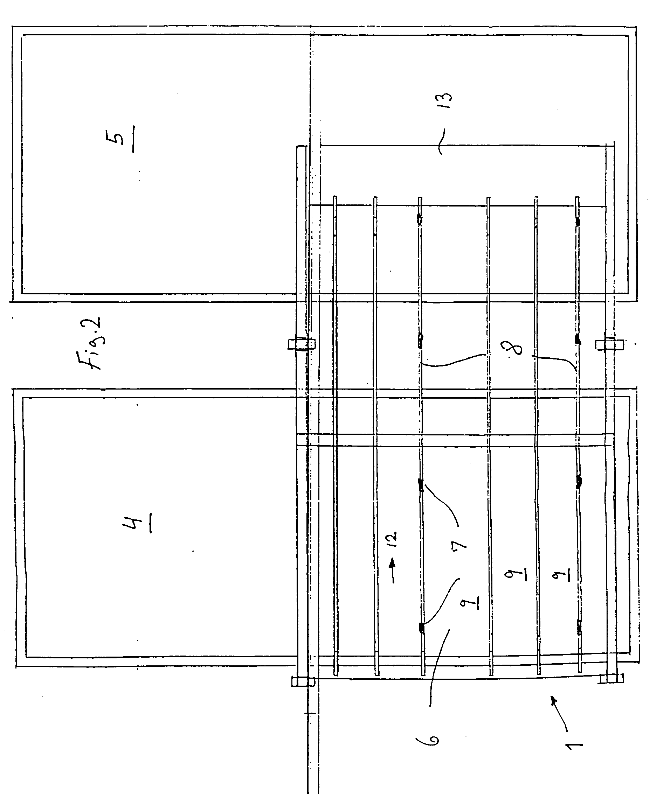

Bei dem in den Figuren 1 und 2 dargestellten ersten Ausführungsbeispiel besteht die Entsorgungseinrichtung im wesentlichen aus einem Arbeitstisch 1, der auf einem Gerüst 2 montiert ist, das auf dem Boden verfahrbare Stützen 3 umfaßt, die am Arbeitstisch 1 angelenkt, in der dargestellten Arbeitsstellung durch eingesteckte Arretierstifte oder dergleichen fixiert und zum Transport der Anlage nach Entfernen der Arretierstifte, Stecker oder dergleichen gegen die Unterseite des Arbeitstisches 1 klappbar sind. Unterhalb des Arbeitstisches 1 bildet das Gerüst 2 einen Aufnahmeraum für zwei über die Länge des Arbeitstisches 1 nebeneinander stehende Container 4,5. Figur 2 läßt erkennen, daß der Arbeitstisch 1 mit dem ihn stützenden Gerüst 2 über die Länge der Container 4,5 verfahrbar ist.

Das in Figur 1 linke untere Ende des Arbeitstisches 1 bildet eine Aufnahme 6 für einen zu entsorgenden Fensterrahmen. In den Arbeitstisch 1 ist ein Förderer integriert, der in dem dargestellten Ausführungsbeispiel aus mehreren, sich über die Länge des Arbeitstisches 1 erstreckenden, endlos umlaufenden und mit Mitnehmern 7 bestückten Ketten 8 besteht, deren Abstand voneinander kleiner ist als die kleinste Breite der zu entsorgenden Fensterrahmen. Dabei können die Ketten 8 bereits die genannte Aufnahme 6 bilden. Die Ketten 8 können aber im Bereich der Aufnahme 6 auch in Nuten eines Aufnahmetisches laufen, wobei lediglich die Mitnehmer 7 über die Auflagefläche des Aufnahmetisches hinausragen.

An die Aufnahme 6 schließen sich Glasdurchfallschlitze 9 an, die sich überwiegend über die erste Längenhälfte des Arbeitstisches 1 erstrecken, sich also oberhalb des in Figur 1 links dargestellten Containers 4 befinden. Oberhalb dieser Glasdurchfallschlitze 9 ist ein Zertrümmerwerk 10 schematisch angedeutet, das zum Zerschlagen des Altglases dient.

Am Ende des Arbeitstisches 1 ist eine Zerkleinerungsvorrichtung 11 für die angeförderten Fensterrahmen angeordnet.

Der Arbeitstisch 1 steigt in Förderrichtung 12 nach oben an und liegt mit seinem Abwurfende 13 angenähert mittig oberhalb des in Figur 1 rechts dargestellten Containers 5.

Die zu entsorgenden alten verglasten Fenster werden nacheinander auf die untere Aufnahme 6 des Arbeitstisches 1 gelegt, von wo sie vom Kettenförderer 7,8 taktweise zum Abwurfende 13 hin gefördert werden. Das Anlaufen und Abstoppen des Förderers wird von einer nicht näher dargestellten Steuerung gesteuert. Zuerst wird der zu entsorgende Fensterrahmen unterhalb des Zertrümmerwerkes 10 und damit oberhalb der Glasdurchfallschlitze 9 sowie oberhalb des Containers 4 angehalten. Das Zertrümmerwerk 10 kann einen von oben senkrecht durch die Rahmenfläche steuerbaren Stempel oder dergleichen aufweisen, der die Glasscheibe nach unten aus dem Rahmen herausdrückt bzw. zerschlägt. Die Glasdurchfallschlitze 9 können auch durch den lichten Abstand zwischen den Ketten 8 gebildet sein. Das zerschlagene bzw. herausgedrückte Glas fällt in den Container 4, während der so entglaste Fensterrahmen im nächsten Arbeitstakt weiter nach oben in den Bereich der Zerkleinerungsvorrichtung 11 gefördert wird. Dabei kann zum Beispiel das in Förderrichtung vorn liegende Rahmenprofil die Steuerung des Förderers über mechanische Abtaster, eine Lichtschranke oder dergleichen beaufschlagen. Besteht die Zerkleinerungsvorrichtung 11 zum Beispiel aus einer Schlagschere, wird der Fensterrahmen vorzugsweise dann angehalten, wenn das vorlaufende Rahmenprofil gerade jenseits der Schlagschere liegt, so daß beim ersten Zerkleinerungsvorgang das vorlaufende, querliegende Rahmenporfil abgeschlagen wird. Je nach Rahmengröße kann dann der Fensterrahmen taktweise weitervortransportiert werden, wobei die längsliegenden Rahmenteile in vorbestimmten Längen abgelängt werden, bis das hintere, querliegende Rahmenprofil in den rechten Container 5 abgeworfen werden kann. Gleichzeitig wird der Förderer durch Auflegen weiterer Fensterrahmen im Bereich der Aufnahme 6 wieder belegt, so daß während der Zerlegung des Fensterrahmens bereits die Entglasung des folgenden Fensterrahmens vorgenommen werden kann.

Die Zerkleinerungsvorrichtung kann auch zum Beispiel als Säge ausgebildet sein, die auf einem Wagen quer über den Arbeitstisch 1 verfahrbar ist. Denkbar ist auch eine Preßeinrichtung, die einen sich über die Breite des Arbeitstisches erstreckenden und durch einen Antrieb über die Länge des Arbeitstisches verschiebbaren Schubbalken aufweist, der den zu entsorgenden Fensterrahmen bereits im Bereich der Aufnahme 6 hintergreift und im Endbereich des Arbeitstisches 1 gegen Anschläge drückt, die in den Förderweg des Fensterrahmens einsteuerbar bzw. aus diesem Förderweg wieder aussteuerbar sind. Bei eingesteuerten Anschlägen zerdrückt dann der Schubbalken den zuvor entglasten Fensterrahmen, wobei die in Förderrichtung liegenden Rahmenteile zerbrechen werden.

In einer abgewandelten Ausführungsform kann der Förderer auch durch eine den Fensterrahmen ergreifende Zange gebildet sein, wobei die Zerkleinerung des Rahmens durch Zerreißen erfolgen kann, indem in den lichten Innenraum des Rahmens Rückhalter eingesteuert werden, die bei weiterem Vorschub des Zangenförderers ein Abreißen des hinteren, querliegenden Rahmenprofils bewirken.

Zur gleichmäßigen Befüllung der beiden Container 4,5 wird die gesamte Anlage während der Verarbeitung der Fensterrahmen über die Länge dieser Container verschoben.

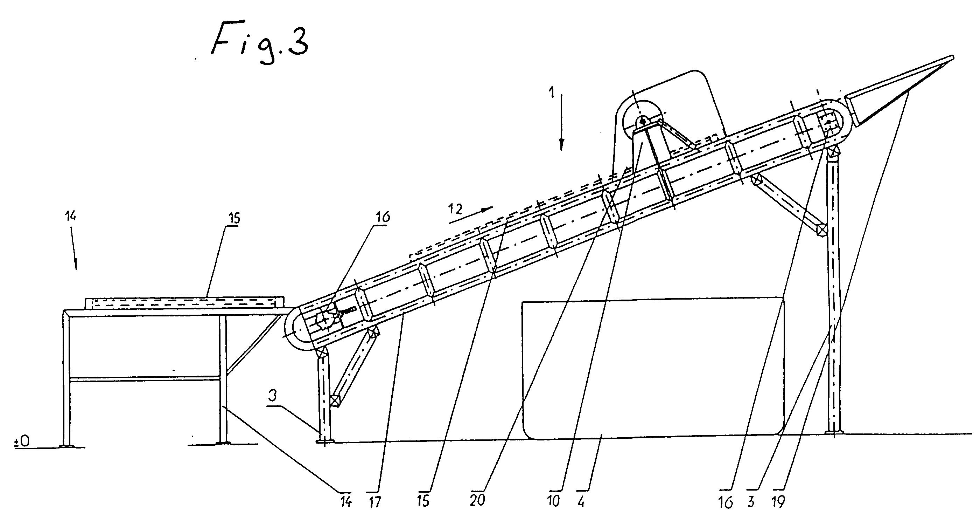

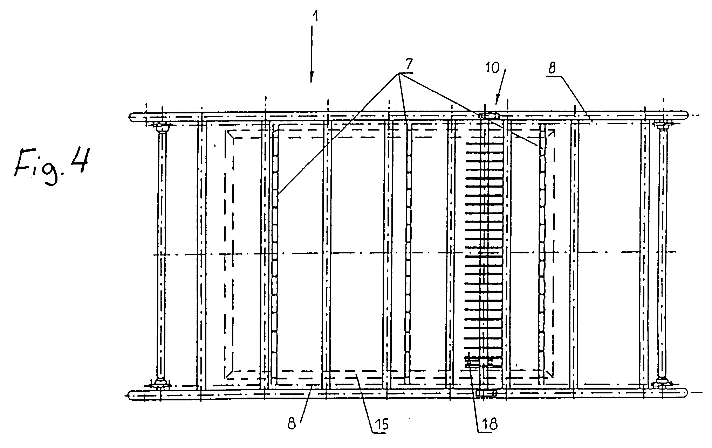

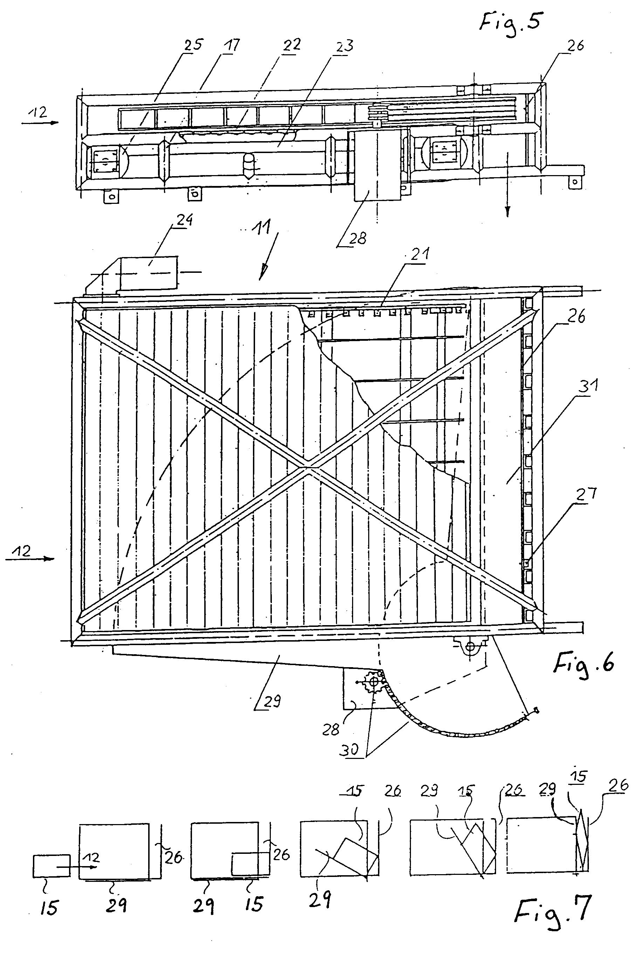

Die Figuren 3 bis 7 zeigen ein zweites Ausführungsbeispiel, das sich gegenüber dem ersten Ausführungsbeispiel im wesentlichen dadurch unterscheidet, daß die Glastrenneinrichtung (Figuren 3 und 4) ein separates Modul darstellt gegenüber einer nachzuschaltenden Rahmenzerkleinerungsvorrichtung, für die die Figuren 5 bis 7 eine abgewandelte Ausführungsform zeigen.

Gemäß Figur 3 ist der eigentlichen Glastrenneinrichtung eine Eingabevorrichtung 14 vorgeschaltet, die auch als Eingabemagazin ausgebildet sein kann und zur Aufnahme der zur entsorgenden Fensterrahmen 15 dient.

Auch bei der in Figur 3 dargestellten Glastrenneinrichtung ist ein in Förderrichtung 12 ansteigender Arbeitstisch 1 vorgesehen, über dessen Länge sich zwei voneinander beabstandete endlos umlaufende Ketten 8 erstrecken, die mit Mitnehmern 7 bestückt sind. Die wirkenden Kräfte werden über Lager 16 für nicht näher dargestellte Kettenumlenkräder einen Rahmen 17 und Stützen 3 abgeleitet.

Beim Einschubvorgang greifen die Mitnehmer 7 unter das Fenster bzw. den Fensterrahmen 15 und befördern diesen kontinuierlich unter einem Zertrümmerwerk 10 hindurch, das hier als Schlagwerk ausgebildet ist, das rotierend angetriebene Schlaghebel 18 aufweist. Die Energie dieser umlaufenden Schlaghebel 18 reicht aus, um die Fensterscheiben vom Fensterrahmen zu trennen und zu zerkleinern. Die Glasbruchstücke fallen durch die Glasdurchfallöffnungen 9 hindurch in den darunter angeordneten Container 4.

Die Ausgabe des entglasten Rahmens erfolgt über einen Rahmenauswurf 19. Abdeckungen 20, die an gefährlichen Stellen angebracht sind, gewährleisten die Betriebssicherheit.

Der Glastrenneinrichtung gemäß den Figuren 3 und 4 kann die in den Figuren 5 bis 7 dargestellte Zerkleinerungsvorrichtung 11 nachgeschaltet werden, die hier als Rahmenpresse ausgebildet ist.

Der zuvor entglaste Fensterrahmen 15 wird in die Rahmen-Zerkleinerungsvorrichtung 11 durch eine Einzugsvorrichtung eingezogen. Diese besteht aus zwei voneinander beabstandeten, in Förderrichtung 12 verlaufenden Laschenketten 21, die über Platten 22 miteinander verbunden sind, die sich auf stationären Gleitschienen 23 abstützen. Der Antrieb der Laschenketten 21 erfolgt über einen Getriebemotor 24 und Kettenräder 25.

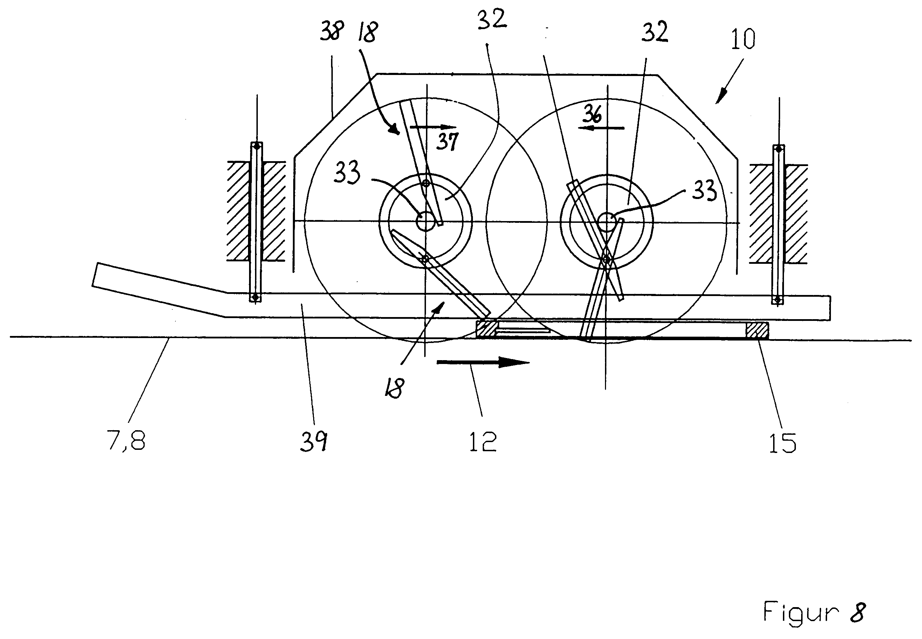

Das in Förderrichtung 12 gesehen hintere Ende der Zerkleinerungsvorrichtung 11 wird durch eine Prallwand 26 gebildet, die in den Förderweg des eingezogenen Fensterrahmens 15 ragt. In der Prallwand 26 ist ein Schalter 27 vorgesehen, der in den Förderweg des Fensterrahmens 15 ragt und bei Beaufschlagung durch diesen Fensterrahmen den Getriebemotor 24 und damit die Einzugsvorrichtung abschaltet und zugleich einen Antrieb 28 einschaltet, der ebenfalls ein Getriebemotor sein kann und zur Verschwenkung eines Preßarmes 29 dient. Dieser Preßarm 29 liegt in seiner Ruhestellung außerhalb des Fensterrahmen-Förderweges angenähert parallel zur Förderrichtung 12 (siehe ausgezogene Darstellung in Figur 6) und ist über ein Kettengetriebe 30, das auch ein Stirn- oder Schneckengetriebe sein kann, innerhalb der Ebene des an der Prallwand 26 stirnseitig anliegenden Fensterrahmens 15 um angenähert 90° verschwenkbar in eine angenähert parallel zur Prallwand 26 liegende Endstellung (siehe gestrichelte Darstellung in Figur 6). Bei dieser den Arbeitstakt darstellenden Verschwenkung des Preßarmes 29 wird der vom Preßarm beaufschlagte Fensterrahmen 15 gemäß der dritten Abbildung in Figur 7 um eine an der Prallwand 26 in Anlage verbleibende Rahmenecke verschwenkt und dann zu einem Parallelogramm verformt und schließlich in einzelne Rahmenteile zerbrochen. Diese Rahmenteile fallen durch eine unterhalb der Einzugsrichtung und oberhalb eines in der Zeichnung nicht näher dargestellten Containers vorgesehene Ausfallöffnung 31 in den genannten Container.

Durch das Drücken über die Ecken wird der Fensterrahmen an seiner empfindlichsten Stelle belastet und dadurch zerstört. Dieses Verfahren benötigt gegenüber einem herkömmlichen Shredderverfahren nur einen Bruchteil der dort aufzuwendenden Energie und ist überdies nahezu verschleißfrei und sehr geräuscharm.

Glas und Rahmenteile lassen sich dann separat abfördern, wobei sich aufgrund der Zerstörung der Fensterrahmen für die Entsorgung ein minimaler Stauraum ergibt.

Die Figuren 8, 9 und 10 zeigen für das Zertrümmerwerk 10 eine abgewandelte Ausführungsform. Vorgesehen ist ein Schlagwerk, das rotierend angetriebene Scheiben 32 aufweist, die drehfest gemeinsam auf einer Welle 33 sitzen und mit Schlaghebeln 18 bestückt sind, die als zweiarmige Hebel ausgebildet sind. Jeder Schlaghebel 18 ist so angelenkt, daß sein wirksamer Schlagarm 34 dem Radius der Scheibe 32 um einen spitzen Winkel α nacheilt. Dies wird dadurch erreicht, daß sich der kürzere Arm 35 jedes Schlaghebels 18 mit einer entsprechend ausgebildeten Anschrägung gegen die Welle 33 anlegt.

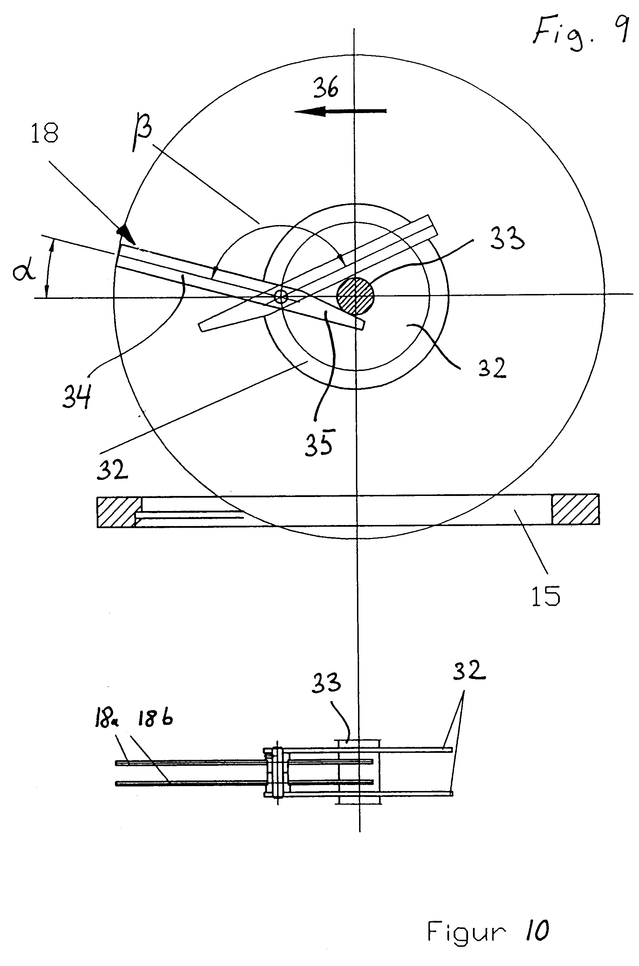

Gemäß Figur 10 können die Schlaghebel 18 jeweils als Schlaghebelpaar ausgebildet sein, dessen beiden Schlaghebel 18a, 18b unabhängig voneinander verschwenkbar sind. Dabei können die Schlaghebel 18 bzw. 18a, 18b beim Aufschlagen auf das Glas des Fensterrahmens 15 um den Winkel β entgegen der Drehrichtung 36 ausweichen und sich in den Endlagen jeweils auf der Welle 33 abstützen.

Bei der in Figur 8 dargestellten Ausführungsform sind zwei hintereinander geschaltete Schlagwerke vorgesehen, von denen das erste Schlagwerk gegen die Förderrichtung 12 des Fensterrahmens 15 arbeitet (siehe Umdrehungspfeil 37), während das zweite Schlagwerk bezogen auf die Förderrichtung 12 der Fensterrahmen als mitlaufendes Schlagwerk arbeitet. Ferner läßt Figur 8 erkennen, daß das Zertrümmerwerk 10 durch eine schallschluckende Schutzhaube 38 abgedeckt ist. Außerdem sind den einlaufenden Fensterrahmen 15 beaufschlagende Niederhalter 39 vorgesehen, die sich von dem Einlaufbereich vor dem Zertrümmerwerk 10 und durch dieses hindurch bis in den Auslaufbereich hinter dem Zertrümmerwerk erstrecken. Diese Niederhalter können an zylindrischen, verschiebbar gelagert Führungen hängen, um den Fensterrahmen 15 nur mit ihrem Eigengewicht zu beaufschlagen.

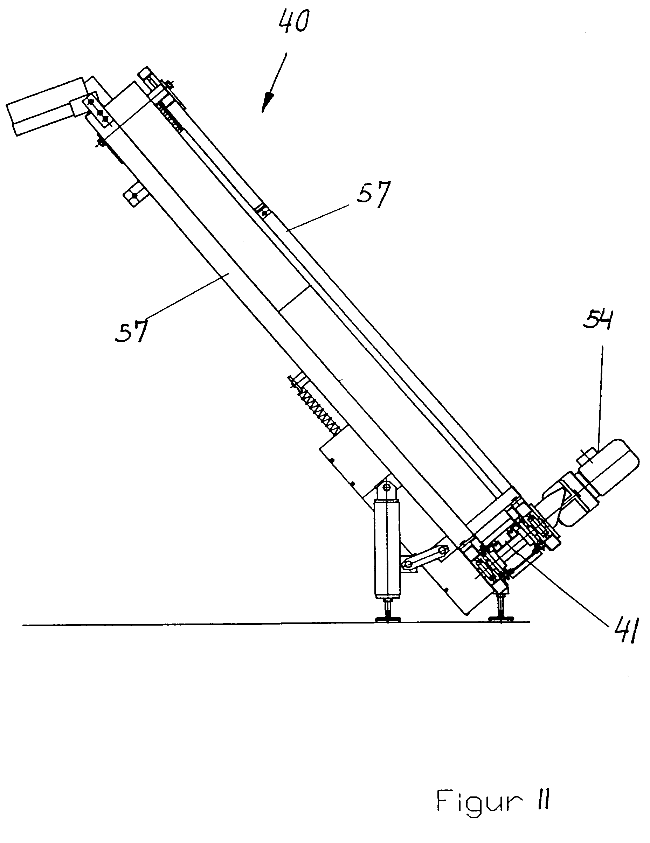

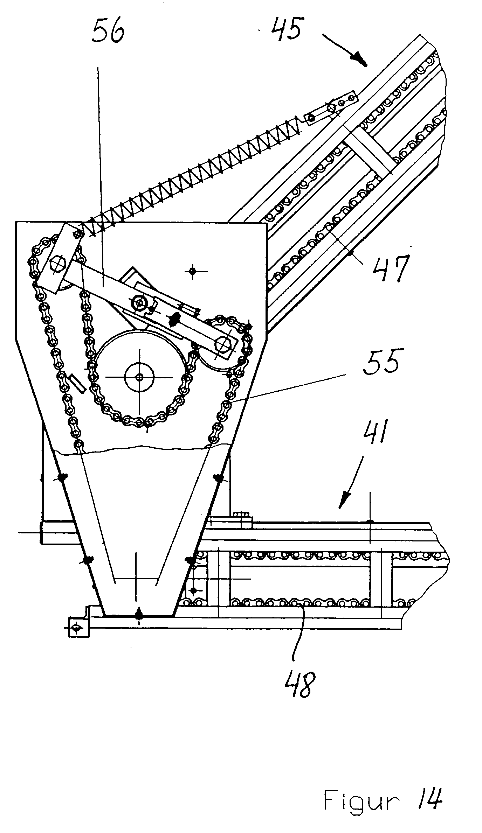

Die Figuren 11 bis 14 zeigen für die Rahmenzerkleinerungsvorrichtung 11 eine abgewandelte Ausführungsform, die auch für sich allein Verwendung finden kann. Vorgesehen ist eine dem Arbeitstisch 1 hinter dem genannten Auslaufbereich des Zertrümmerwerkes 10 nachgeschaltete Rutsche 40, die den aus dem Zertrümmerwerk 10 kommenden, nunmehr entglasten Fensterrahmen 15 - vorzugsweise über einen großen Umlenkradius - übernimmt, um ihn, vorzugsweise leicht geneigt, auf einem Längsförderer 41 abzustellen, der den entglasten Fensterrahmen 15 einer Rahmenzerkleinerungsvorrichtung 11 zuführt. Letztere weist einen den Fensterrahmen 15 aufnehmenden und sich in dessen Förderrichtung 42 verjüngenden Einzugskeil 43 auf, der in einem die Höhe und Breite des zusammengepeßten Rahmenpaketes bestimmenden Austrittsspalt 44 mündet. Dieser Einzugskeil 43 wird bodenseitig von dem genannten Längsförderer 41 und im Schrägbereich von einer Einzugseinrichtung 45 gebildet. Diese Einzugseinrichtung 45 ist eine mit Mitnehmern 46 bestückte Kette 47, die mit einer gegenüber dem Längsförderer 41 langsameren Geschwindigkeit umläuft.

Der Längsförderer 41 weist - ebenso wie die Einzugseinrichtung 45 - zwei parallel mit lichtem Abstand nebeneinander geführte Endlosketten 48 auf, die miteinander durch Winkelstücke 49 verbunden sind, deren im Obertrum aufrecht stehende Schenkel 50 ein Aufnahmerost für den Fensterrahmen 15 bilden, während die in der horizontalen Förderebene liegenden Schenkel 51 einen geschlossenen Förderboden bilden. Diese Ausbildung ist für die Ketten 47 der Einzugseinrichtung 45 in Figur 14 dargestellt.

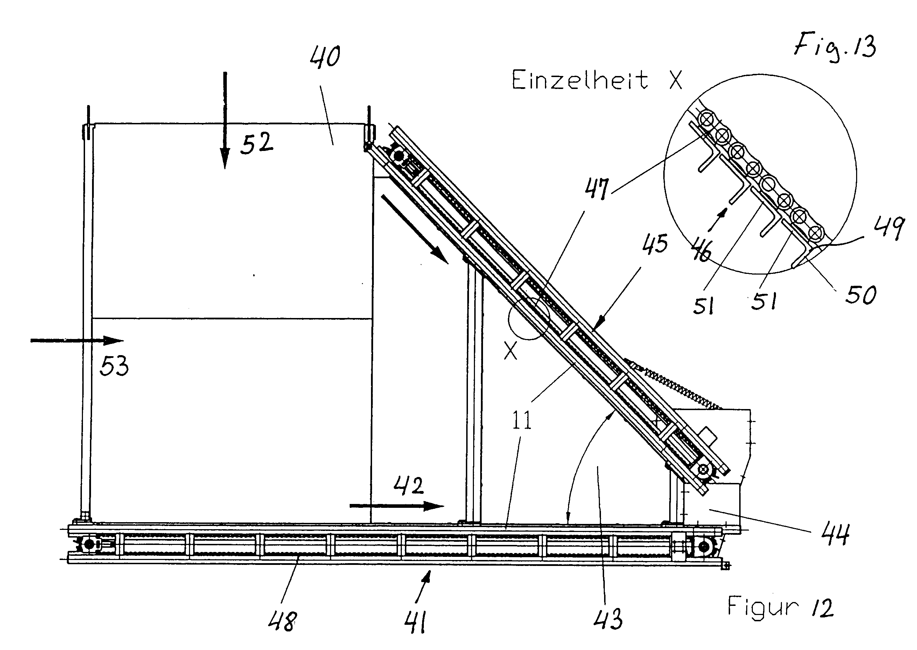

In Figur 12 gibt der Pfeil 52 die Zuführrichtung des vom Zertrümmerwerk 10 kommenden Fensterrahmens 15 an. Der rechtwinklig hierzu eingezeichnete Pfeil 53 soll deutlich machen, daß die Fensterrahmen 15 von vornherein der Rahmenzerkleinerungsvorrichtung 11 in einer der Förderrichtung 42 entsprechenden Richtung zugeführt werden können.

Der Antrieb der Einzugseinrichtung 45 erfolgt von dem Antrieb 54 des Längsförderers 41 über ein zwischengeschaltetes Ausgleichsgetriebe 55, das gemäß Figur 14 ein auf einer Schwinge 56 angeordnetes Kettengetriebe ist.

Figur 11 läßt noch erkennen, daß der auf dem Längsförderer 41 stehende Fensterrahmen 15 zwischen zwei mit dem Längsförderer 41 eine Rinne bildenden Seitenwandungen 57 geführt ist.

## Patentansprüche

1. Einrichtung zur Entsorgung alter verglaster Fenster, **gekennzeichnet durch** eine Anlage zur Trennung des Altglases vom zugeordneten Fensterrahmen (15) und zur anschließenden Zerkleinerung des Fensterrahmens (15), mit folgenden Merkmalen:
a) ein Arbeitstisch (1) mit einem sich über seine Länge erstreckenden Förderer (7,8) zur Aufnahme der nacheinander flach aufgelegten Fensterrahmen (15);
b) Glasdurchfallöffnungen (9), die im Arbeitstisch (1) unterhalb des Förderers (7,8) vorgesehen sind;
c) ein Zertrümmerwerk (10) zum Zerschlagen des Altglases ist oberhalb des Arbeitstisches (1) über den Glasdurchfallöffnungen (9) angeordnet;
d) ein sich auf den Boden stützendes Gerüst (2), das den Arbeitstisch (1) trägt und unterhalb der Glasdurchfallöffnungen (9) einen Aufnahmeraum für einen Container (4) bildet;
e) eine dem Arbeitstisch (1) nachgeordnete Zerkleinerungsvorrichtung (11) für die angeförderten entglasten Fensterrahmen (15);
f) unterhalb der Zerkleinerungsvorrichtung (11) ist ein Container (5) zur Aufnahme der zerkleinerten Rahmenteile angeordnet.

2. Einrichtung nach Anspruch 1, **dadurch gekennzeichnet,** daß dem Arbeitstisch (1) eine Eingabevorrichtung (14) für die zu entsorgenden Fensterrahmen (15) vorgeschaltet ist.

3. Einrichtung nach Anspruch 1 oder 2, **dadurch gekennzeichnet**, daß der Förderer (7,8) des Arbeitstisches (1) zumindest zwei sich über die Länge des Arbeitstisches (1) erstreckende, endlos umlaufende und mit Mitnehmern (7) bestückte Ketten (8) aufweist, deren Abstand voneinander kleiner ist als die kleinste Breite der zu entsorgenden Fensterrahmen (15).

4. Einrichtung nach Anspruch 1 oder 2, **dadurch gekennzeichnet**, daß der Förderer des Arbeitstisches (1) ein sich über dessen Breite erstreckender Schubbalken ist.

5. Einrichtung nach Anspruch 1 oder 2, **dadurch gekennzeichnet,** daß der Förderer des Arbeitstisches (1) eine den Fensterrahmen (15) ergreifende Zange ist.

6. Einrichtung nach einem der vorgehenden Ansprüche, **dadurch gekennzeichnet**, daß der Förderer (7,8) des Arbeitstisches (1) einem kontinuierlichen Antrieb unterliegt.

7. Einrichtung nach einem der vorhergehenden Ansprüche, **dadurch gekennzeichnet,** daß der Arbeitstisch (1) in Förderrichtung (12) ansteigt.

8. Einrichtung nach einem der vorhergehenden Ansprüche, **dadurch gekennzeichnet,** daß das Gerüst (2) auf dem Boden verfahrbar ist.

9. Einrichtung nach einem der vorhergehenden Ansprüche, **dadurch gekennzeichnet**, daß das Gerüst (2) lotrechte Stützen (3) aufweist, die für den Transport des Arbeitstisches (1) gegen dessen Unterseite klappbar sind.

10. Einrichtung nach einem der vorhergehenden Ansprüche, **dadurch gekennzeichnet**, daß das Zertrümmerwerk (10) ein Schlagwerk ist, das rotierend angetriebene Schlaghebel (18) aufweist.

11. Einrichtung nach einem der vorhergehenden Ansprüche, **dadurch gekennzeichnet**, daß die Zerkleinerungsvorrichtung (11) eine Schlagschere ist.

12. Einrichtung nach einem der vorhergehenden Ansprüche, **dadurch gekennzeichnet**, daß die Zerkleinerungsvorrichtung (11) einen den zu zerkleinernden Fensterrahmen (15) beaufschlagenden Niederhalter aufweist.

13. Einrichtung nach einem der vorhergehenden Ansprüche, **dadurch gekennzeichnet**, daß die Zerkleinerungsvorrichtung (11) auf einem quer zum Arbeitstisch (1) verfahrbaren Wagen montiert ist.

14. Einrichtung nach einem der vorhergehenden Ansprüche, **gekennzeichnet durch** eine Steuerung für einen taktweisen Vorschub des zu zerkleinernden Fensterrahmens (15) im Bereich der Zerkleinerungsvorrichtung (11).

15. Einrichtung nach einem der vorhergehenden Ansprüche, **dadurch gekennzeichnet**, daß im Bereich der Zerkleinerungsvorrichtung (11) in den Förderweg des Fensterrahmens (15) ein- bzw. aus dem Förderweg aussteuerbare Anschläge vorgesehen sind.

16. Einrichtung nach einem der Ansprüche 1 bis 9, **dadurch gekennzeichnet**, daß die Zerkleinerungsvorrichtung (11) als Rahmenpresse mit folgenden Merkmalen ausgebildet ist:
a) eine in den Förderweg des Fensterrahmens (15) ragende Prallwand (26);
b) eine den Fensterrahmen (15) gegen die Prallwand (26) fördernde Einzugsvorrichtung (21-25);
c) ein in seiner Ruhestellung außerhalb des Fensterrahmen-Förderweges liegender Pressarm (29), der innerhalb der Fensterrahmenebene des an der Prallwand (26) anliegenden Fensterrahmens (15) über einen Antrieb (28) aus seiner Ruhestellung verschwenkbar ist gegen den positionierten Fensterrahmen (15) in eine angenähert parallel zur Prallwand (26) liegende Endstellung;
d) eine vor der Prallwand (26), unterhalb der Einzugsvorrichtung (21-25) und oberhalb des zweiten Containers (5) vorgesehene Ausfallöffnung (31) für die Rahmenteile.

17. Einrichtung nach Anspruch 16, **dadurch gekennzeichnet**, daß die Einzugsvorrichtung (21-25) zwei voneinander beabstandete, in Förderrichtung (12) verlaufende Laschenketten (21) aufweist, die über Platten (22) miteinander verbunden sind, die sich auf stationären Gleitschienen (23) abstützen.

18. Einrichtung nach Anspruch 17, **dadurch gekennzeichnet**, daß die Laschenketten (21) über Kettenräder (25) und einen Getriebemotor (24) angetrieben sind.

19. Einrichtung nach Anspruch 16, 17 oder 18, **gekennzeichnet durch** einen in den Förderweg des Fensterrahmens (15) ragenden, vorzugsweise in der Prallwand (26) angeordneten Schalter (27) zur Unterbrechung der Einzugsvorrichtung (21-25) und zur Betätigung des Preßarmes (29).

20. Einrichtung zur Entsorgung alter verglaster Fenster mit einer Anlage zur Trennung des Altglases vom zugeordneten Fensterrahmen (15), insbesondere nach einem der vorhergehenden Ansprüche, **gekennzeichnet durch** folgende Merkmale:
a) Ein Arbeitstisch (1) mit einem sich über seine Länge erstreckenden Förderer (7,8) zur Aufnahme der nacheinander flach aufgelegten Fensterrahmen (15);
b) Glasdurchfallöffnungen (9), die im Arbeitstisch (1) unterhalb des Förderers (7,8) vorgesehen sind;
c) ein Zertrümmerwerk (10) zum Zerschlagen des Altglases ist oberhalb des Arbeitstisches (1) über den Glasdurchfallöffnungen (9) angeordnet;
d) eine unterhalb des Arbeitstisches (1) vorgesehene Auffangeinrichtung für das zerschlagene, durch die Glasdurchfallöffnungen (9) hindurchfallende Altglas;
e) das Zertrümmerwerk (10) ist ein Schlagwerk (18,32, 33, 34, 35), das rotierend angetriebene Schlaghebel (18) aufweist;
f) die Schlaghebel (18) sind als zweiarmige Hebel ausgebildet und an einer rotierend angetriebenen Scheibe (32) so angelenkt, daß der wirksame Schlagarm (34) dem Radius der Scheibe (32) um einen Winkel (α) nacheilt;
g) oberhalb des Förderers (7,8) sind Niederhalter (39) angeordnet, die sich von dem Einlaufbereich vor dem Zertrümmerwerk (10) und durch dieses hindurch bis in den Auslaufbereich hinter dem Zertrümmerwerk (10) erstrecken.

21. Einrichtung nach Anspruch 20, **dadurch gekennzeichnet**, daß das Schlagwerk (18,32,33,34,35) bezogen auf die Förderrichtung (12) der Fensterrahmen (15) als mitlaufendes (36) Schlagwerk arbeitet.

22. Einrichtung nach Anspruch 20 oder 21, **dadurch gekennzeichnet**, daß die Schlaghebel (18) jeweils als Schlaghebelpaar ausgebildet sind, dessen beiden Schlaghebel (18a,18b) unabhängig voneinander verschwenkbar sind.

23. Einrichtung nach Anspruch 20, 21 oder 22, **dadurch gekennzeichnet**, daß dem Schlagwerk (18,32,33,34,35) ein zweites, gegenläufig (37) angetriebenes Schlagwerk vor- oder nachgeschaltet ist.

24. Einrichtung nach einem der Ansprüche 20 bis 23, **dadurch gekennzeichnet**, daß das Zertrümmerwerk (10) durch eine schallschluckende Schutzhaube (38) abgedeckt ist.

25. Einrichtung nach einem der Ansprüche 20 bis 24, **dadurch gekennzeichnet**, daß dem Arbeitstisch (1) hinter dem genannten Auslaufbereich eine den entglasten Fensterrahmen (15) übernehmende Rutsche (40) nachgeordnet ist, die den Fensterrahmen (15) auf einem Längsförderer (41) abstellt, der den entglasten Fensterrahmen (15) einer Rahmenzerkleinerungsvorrichtung (11) zuführt.

26. Einrichtung nach Anspruch 25, **dadurch gekennzeichnet**, daß die Rahmenzerkleinerungsvorrichtung (11) einen den Fensterrahmen (15) aufnehmenden und sich in dessen Förderrichtung (42) verjüngenden Einzugskeil (43) aufweist, der in einem die Höhe und Breite des zusammengepreßten Rahmenpaketes bestimmenden Austrittsspalt (44) mündet.

27. Einrichtung nach Anspruch 26, **dadurch gekennzeichnet**, daß der Einzugskeil (43) bodenseitig von dem genannten Längsförderer (41) und im Schrägbereich von einer Einzugseinrichtung (45) gebildet ist.

28. Einrichtung nach Anspruch 27, **dadurch gekennzeichnet**, daß die Einzugseinrichtung (45) eine mit Mitnehmern (46) bestückte Kette (47) ist, die mit einer gegenüber dem Längsförderer (41) langsameren Geschwindigkeit umläuft.

29. Einrichtung nach Anspruch 27 oder 28, **dadurch gekennzeichnet**, daß der Antrieb der Einzugseinrichtung (45) von dem Antrieb (54) des Längsförderers (41) über ein zwischengeschaltetes Ausgleichsgetriebe (55) erfolgt.

30. Einrichtung nach Anspruch 29, **dadurch gekennzeichnet**, daß das Ausgleichsgetriebe (55) ein auf einer Schwinge (56) angeordnetes Kettengetriebe ist.

31. Einrichtung nach einem der Ansprüche 25 bis 30, **dadurch gekennzeichnet**, daß der auf dem Längsförderer (41) stehende Fensterrahmen (15) zwischen zwei mit dem Längsförderer (41) eine Rinne bildenden Seitenwandungen (57) geführt ist.

32. Einrichtung nach einem der Ansprüche 25 bis 31, **dadurch gekennzeichnet**, daß der Längsförderer (41) zwei parallel mit lichtem Abstand nebeneinander geführte Endlosketten (48) aufweist, die miteinander durch Winkelstücke (49) verbunden sind, deren aufrechtstehende Schenkel (50) ein Aufnahmerost für den Fensterrahmen (15) bilden, während die in der horizontalen Förderebene liegenden Schenkel (51) einen geschlossenen Förderboden bilden.

33. Einrichtung nach einem der Ansprüche 20 bis 32, **gekennzeichnet durch** eine Anordnung innerhalb eines an beliebiger Stelle aufstellbaren Containers oder dergleichen

## Claims

1. Apparatus for disposing of old, glazed windows, **characterized by** a device for separating the old glass from the associated window frame (15) and for then breaking up the said window frame (15), having the following features:
a) a worktable (1) having a conveyer (7, 8) extending over its length, for receiving the window frames (15) which are laid flat thereon one after another;
b) drop-through openings (9) for the glass, which are provided in the worktable (1) underneath the conveyer (7, 8);
c) a smashing mechanism (10) for shattering the old glass, disposed above the worktable (1) over the drop-through openings (9) for the glass;
d) a framework (2), which is supported on the ground, carrying the worktable (1) and forming, underneath the drop-through openings (9) for the glass, a receiving space for a container (4);
e) a breaking-up device (11) for the deglazed window frames (15) conveyed to it, which is disposed downstream of the worktable (1);
f) a container (5) is disposed underneath the breaking-up device (11) for the purpose of receiving the broken-up parts of the frames.

2. Apparatus according to claim 1, **characterized in that** a feeding-in device (14) for the window frames (15) to be disposed of is incorporated upstream of the worktable (1).

3. Apparatus according to claim 1 or 2, **characterized in that** the conveyer (7, 8) of the worktable (1) has at least two chains (8) which extend over the length of the said worktable (1), revolve in an endless manner and are equipped with entrainment means (7), and the distance of which from one another is smaller than the smallest width of the window frames (15) to be disposed of.

4. Apparatus according to claim 1 or 2, **characterized in that** the conveyer of the worktable (1) is a thrust beam extending over the width of the latter.

5. Apparatus according to claim 1 or 2, **characterized in that** the conveyer of the worktable (1) is a set of tongs gripping the window frame (15).

6. Apparatus according to one of the preceding claims, **characterized in that** the conveyer (7, 8) of the worktable (1) is driven in a continuous manner.

7. Apparatus according to one of the preceding claims, **characterized in that** the worktable (1) rises in the direction of conveyance (12).

8. Apparatus according to one of the preceding claims, **characterized in that** the framework (2) can be moved on the ground.

9. Apparatus according to one of the preceding claims, **characterized in that** the framework (2) has perpendicular supports (3) which can be folded against the underside of the worktable (1) for the purpose of transporting the latter.

10. Apparatus according to one of the preceding claims, **characterized in that** the smashing mechanism (10) is a striking mechanism which has rotatingly driven striking levers (18).

11. Apparatus according to one of the preceding claims, **characterized in that** the breaking-up device (11) is a set of striking shears.

12. Apparatus according to one of the preceding claims, **characterized in that** the breaking-up device (11) has a holding-down device acting upon the window frame (15) to be broken up.

13. Apparatus according to one of the preceding claims, **characterized in that** the breaking-up device (11) is mounted on a carriage which can be moved transversely to the worktable (1).

14. Apparatus according to one of the preceding claims, **characterized by** a control system for the timed advance, in the region of the breaking-up device (11), of the window frame (15) to be broken up.

15. Apparatus according to one of the preceding claims, **characterized in that** there are provided, in the region of the breaking-up device (11), stops which can be manoeuvred into or out of the path of conveyance of the window frame (15).

16. Apparatus according to one of claims 1 to 9, **characterized in that** the breaking-up device (11) is constructed as a frame press having the following features:
a) a baffle (26) projecting into the path of conveyance of the window frame (15);
b) a draw-in device (21-25) conveying the window frame (15) against the baffle (26);
c) a pressing arm (29) which is located, in its rest position, outside the path of conveyance of the window frame and which, via a drive (28), can be swivelled, inside the window frame plane of the window frame (15) abutting against the baffle (26), out of its rest position and, against the positioned window frame (15), into an end position which is located approximately parallel to the baffle (26);
d) a drop-out opening (31) for the frame parts which is provided upstream of the baffle (26), underneath the draw-in device (21-25) and above the second container (5).

17. Apparatus according to claim 16, **characterized in that** the draw-in device (21-25) has two sidebar chains (21) which are at a distance from one another and extend in the direction of conveyance (12) and which are connected to one another via plates (22) which are supported on stationary slide rails (23).

18. Apparatus according to claim 17, **characterized in that** the sidebar chains (21) are driven via chain wheels (25) and a geared motor (24).

19. Apparatus according to claim 16, 17 or 18, **characterized by** a switch (27), which projects into the path of conveyance of the window frame (15) and is preferably disposed in the baffle (26), for switching off the draw-in device (21-25) and for actuating the pressing arm (29).

20. Apparatus for disposing of old, glazed windows, having a device for separating the old glass from the associated window frame (15), particularly according to one of the preceding claims, **characterized by** the following features:
a) a worktable (1) having a conveyer (7, 8) extending over its length, for receiving the window frames (15) which are laid flat thereon one after another;
b) drop-through openings (9) for the glass, which are provided in the worktable (1) underneath the conveyer (7, 8);
c) a smashing mechanism (10) for shattering the old glass, disposed above the worktable (1) over the drop-through openings (9) for the glass;
d) a catching arrangement, which is provided underneath the worktable (1), for the shattered old glass dropping through the drop-through openings (9) for the glass;
e) the smashing mechanism (10) being a striking mechanism (18, 32, 33, 34, 35) which has rotatingly driven striking levers (18).
f) the striking levers (18) being constructed as two-armed levers and being articulated on a rotatingly driven disc (32) in such a way that the operative striking arm (34) lags behind the radius of the disc (32) by an angle (α);
g) disposed above the conveyer (7, 8) are holding-down devices (39) which extend from the run-in region upstream of the smashing mechanism (10), through the latter and into the run-out region behind the said smashing mechanism (10).

21. Apparatus according to claim 20, **characterized in that** the striking mechanism (18, 32, 33, 34, 35) operates, referred to the direction of conveyance (12) of the window frame (15), as a co-rotating (36) striking mechanism.

22. Apparatus according to claim 20 or 21, **characterized in that** the striking levers (18) are constructed, in each case, as a pair of striking levers, the two striking levers (18a, 18b) of which can be swivelled independently of one another.

23. Apparatus according to claim 20, 21 or 22, **characterized in that** a second striking mechanism, which is driven so as to run in the opposite direction (37), is incorporated upstream or downstream of the striking mechanism (18, 32, 33, 34, 35).

24. Apparatus according to one of claims 20 to 23, **characterized in that** the smashing mechanism (10) is covered by a sound-absorbing protective hood (38).

25. Apparatus according to one of claims 20 to 24, **characterized in that** there is disposed, downstream of the worktable (1) and behind the said run-out region, a chute (40) which takes on the deglazed window frame (15) and sets it down on a longitudinal conveyer (41) which feeds the said deglazed window frame (15) to a frame breaking-up device (11).

26. Apparatus according to claim 25, **characterized in that** the frame breaking-up device (11) has a draw-in wedge formation (43) which receives the window frame (15) and tapers in the direction of conveyance (42) of the latter and which discharges in an outlet gap (44) which determines the height and width of the compressed frame bundle.

27. Apparatus according to claim 26, **characterized in that** the draw-in wedge formation (43) is formed, on the ground side, by the said longitudinal conveyer (41) and, in the sloping region, by a draw-in apparatus (45).

28. Apparatus according to claim 27, **characterized in that** the draw-in apparatus (45) is a chain (47) which is equipped with entrainment means (46) and revolves at a slower speed than the longitudinal conveyer (41).

29. Apparatus according to claim 27 or 28, **characterized in that** the draw-in apparatus (45) is driven by the drive (54) of the longitudinal conveyer (41) via an interposed differential gear unit (55).

30. Apparatus according to claim 29, **characterized in that** the differential gear unit (55) is a chain-type gear unit disposed on a rocker (56).

31. Apparatus according to one of claims 25 to 30, **characterized in that** the window frame (15) standing on the longitudinal conveyer (41) is guided between two side walls (57) which, together with the said longitudinal conveyer (41), form a trough.

32. Apparatus according to one of claims 25 to 31, **characterized in that** the longitudinal conveyer (41) has two endless chains (48) which are guided parallel side by side with a clear interval and are connected to one another by angle pieces (49), of which the upright sidepieces (50) form a receiving grid for the window frame (15), while the sidepieces (51) located in the horizontal plane of conveyance form a closed conveying floor.

33. Apparatus according to one of claims 20 to 32, **characterized by** its disposition within a container or the like which can be set up at any desired location.

## Revendications

1. Dispositif pour éliminer les vieilles fenêtres vitrées, caractérisé par une Dispositif pour séparer le verre usagé du cadre de fenêtre associé (15) puis pour déchiqueter le cadre de fenêtre (15), comportant les particularités suivantes :
a) une table de travail (1) avec un transporteur (7, 8) s'étendant sur la longueur de celle-ci pour recevoir les cadres de fenêtre posés à plat les uns derrière les autres (15) ;
b) des ouvertures de chute du verre (9), prévues dans la table de travail (1) sous le transporteur (7, 8) ;
c) un mécanisme de fragmentation (10) pour briser le verre usagé est disposé au-dessus de la table de travail (1), au-dessus des ouvertures (9) de chute du verre ;
d) un bâti (2) s'appuyant sur le sol, qui porte la table de travail (1) et forme sous les ouvertures (9) de chute du verre un logement pour un conteneur (4) ;
e) un dispositif déchiqueteur (11) pour les cadres de fenêtre (15) acheminés sans vitres, disposé en aval de la table de travail (1) ;
f) un conteneur (5) pour recevoir les fragments de cadres déchiquetés est disposé sous le dispositif déchiqueteur (11).

2. Dispositif selon la revendication 1, caractérisé en ce qu'un dispositif d'alimentation (14) pour les cadres de fenêtre à éliminer (15) est monté en amont de la table de travail (1).

3. Dispositif selon la revendication 1 ou 2, caractérisé en ce que le transporteur (7, 8) de la table de travail (1) présente deux chaînes (8) s'étendant sur la longueur de la table de travail (1), circulant sans fin, et munies d'entraîneurs (7), la distance entre ces chaînes étant plus petite que la plus petite largeur des cadres de fenêtre (15) à éliminer.

4. Dispositif selon la revendication 1 ou 2, caractérisé en ce que le transporteur de la table de travail (1) est une barre pousseuse s'étendant sur la largeur de la table de travail.

5. Dispositif selon la revendication 1 ou 2, caractérisé en ce que le transporteur de la table de travail (1) est une pince saisissant le cadre de fenêtre (15).

6. Dispositif selon l'une des revendications précédentes, caractérisé en ce que le transporteur (7, 8) de la table de travail (1) est soumis à un entraînement continu.

7. Dispositif selon l'une des revendications précédentes, caractérisé en ce que la table de travail (1) est en pente montante dans le sens du transport (12).

8. Dispositif selon l'une des revendications précédentes, caractérisé en ce que le bâti (2) est déplaçable sur le sol.

9. Dispositif selon l'une des revendications précédentes, caractérisé en ce que le bâti (2) présente des appuis verticaux (3) qui sont rabattables contre la face inférieure de la table de travail (1) pour le transport de celle-ci.

10. Dispositif selon l'une des revendications précédentes, caractérisé en ce que le mécanisme de fragmentation (10) est un mécanisme de percussion, qui présente des leviers percuteurs (18) entraînés en rotation.

11. Dispositif selon l'une des revendications précédentes, caractérisé en ce que le dispositif déchiqueteur (11) une cisaille guillotine.

12. Dispositif selon l'une des revendications précédentes, caractérisé en ce que le dispositif déchiqueteur (11) présente un dispositif de maintien venant en appui sur les cadres de fenêtre à déchiqueter (15).

13. Dispositif selon l'une des revendications précédentes, caractérisé en ce que le dispositif déchiqueteur (11) est monté sur un chariot déplaçable transversalement à la table de travail (1).

14. Dispositif selon l'une des revendications précédentes, caractérisé par une commande pour une avance cadencée des cadres de fenêtre à déchiqueter (15) dans la région du dispositif déchiqueteur (11).

15. Dispositif selon l'une des revendications précédentes, caractérisé en ce qu'il est prévu dans la région du dispositif déchiqueteur (11), dans le trajet de transport du cadre de fenêtre (15), des butées pouvant être commandées pour entrer et sortir du trajet de transport.

16. Dispositif selon l'une des revendications 1 à 9, caractérisé en ce que le dispositif déchiqueteur (11) est réalisé sous la forme d'une presse à cadre ayant les particularités suivantes :
a) une paroi d'impact (26) faisant saillie dans le trajet de transport du cadre de fenêtre (15) ;
b) un dispositif introducteur (21-25) faisant avancer le cadre de fenêtre (15) contre la paroi d'impact (26) ;
c) un bras de presse (29) qui dans sa position de repos s'étend en dehors du trajet de transport des cadres de fenêtre, et qu'à partir de sa position de repos on peut faire pivoter, dans le plan du cadre de fenêtre (15) appuyé sur la paroi d'impact (26), contre le cadre de fenêtre positionné (15) jusqu'à une position finale s' étendant sensiblement parallèlement à la paroi d'impact (26), au moyen d'un entraînement (28) ;
d) une ouverture de chute (31) pour les fragments de cadre, prévue devant la paroi d'impact (26) sous le dispositif introducteur (21 à 25) et au-dessus du deuxième conteneur (5).

17. Dispositif selon la revendication 16, caractérisé en ce que le dispositif introducteur (21 à 25) présente deux chaînes à maillons (21) écartées l'une de l'autre, s'étendant dans la direction de transport (12) et qui sont reliées l'une à l'autre par des plaques (22) qui s'appuient sur des rails de glissement fixes (23).

18. Dispositif selon la revendication 17, caractérisé en ce que les chaînes à maillons sont entraînées par l'intermédiaire de pignons à chaînes (25) et d'un motoréducteur (24).

19. Dispositif selon la revendication 16, 17 ou 18, caractérisé par un commutateur (27) faisant saillie dans le trajet de transport du cadre de fenêtre (15), disposé de préférence dans la paroi d'impact (26), pour interrompre le dispositif introducteur (21 à 25) et actionner le bras de presse (29).

20. Dispositif pour éliminer les vieilles fenêtres vitrées, comportant une installation pour séparer le verre usagé du cadre de fenêtre associé (15), en particulier selon l'une des revendications précédentes, caractérisé par les particularités suivantes :
a) une table de travail (1) avec un transporteur (7, 8) s'étendant sur la longueur de celle-ci pour recevoir les cadres de fenêtre posés à plat les uns derrière les autres (15) ;
b) des ouvertures de chute du verre (9), prévues dans la table de travail (1) sous le transporteur (7, 8) ;
c) un mécanisme de fragmentation (10) pour briser le verre usagé est disposé au-dessus de la table de travail (1), au-dessus des ouvertures (9) de chute du verre ;
d) un dispositif récepteur prévu sous la table de travail (1) pour le verre usagé, brisé, tombant à travers les ouvertures de chute du verre (9) ;
e) le mécanisme de fragmentation (10) est un mécanisme de percussion (18, 32, 33, 34, 35), qui présente des leviers percuteurs (18) entraînés en rotation ;
f) les leviers percuteurs (18) sont réalisés sous la forme de leviers à deux bras et sont articulés à un disque (32) entraîné en rotation, de façon que le bras percuteur actif (34) soit en retard sur le rayon d'un angle (α) ;
g) au-dessus du transporteur (7, 8) sont disposés des dispositifs de maintien (39) qui s'étendent depuis la région d'introduction en amont du mécanisme de fragmentation (10) et à travers celui-ci jusque dans la zone de sortie en aval du mécanisme de fragmentation (10) (figures 8 et 9).

21. Dispositif selon la revendication 20, caractérisé en ce que le mécanisme de percussion (18, 32, 33, 34, 35) fonctionne en mécanisme accompagnant (36) relativement à la direction de transport (12) des cadres de fenêtre (15).

22. Dispositif selon la revendication 20 ou 21, caractérisé en ce que les leviers percuteurs (18) sont réalisés sous la forme de paires de leviers percuteurs, les deux leviers percuteurs (18a, 18b) de chaque paire pouvant pivoter indépendamment l'un de l'autre (figure 10).

23. Dispositif selon la revendication 20, 21 ou 22, caractérisé en ce qu'en amont ou en aval du mécanisme de percussion (18, 32, 33, 34, 35) est monté un deuxième mécanisme de percussion entraîné en sens contraire (37) (figure 8).

24. Dispositif selon l'une des revendications 20 à 23, caractérisé en ce que le mécanisme de fragmentation (10) est recouvert par un capot protecteur (38) d'absorption acoustique (figure 8).

25. Dispositif selon l'une des revendications 20 à 24, caractérisé en ce qu'un toboggan (40) disposé en aval de la table de travail (1) derrière la région de sortie précitée reprend les cadres de fenêtre (15) débarrassés de leurs vitres, et dépose les cadres de fenêtre (15) sur un transporteur longitudinal (41) qui conduit les cadres de fenêtre (15) débarrassés de leurs vitres à un dispositif de déchiquetage des cadres (11) (figures 11 et 12).

26. Dispositif selon la revendication 25, caractérisé en ce que le dispositif déchiqueteur de cadres (11) présente un coin d'introduction (43) qui reçoit le cadre de fenêtre (15) et se rétrécit selon sa direction de transport (42), et qui aboutit à une fente de sortie (44) qui détermine la hauteur et la largeur du paquet de cadres comprimés.

27. Dispositif selon la revendication 26, caractérisé en ce que le coin d'introduction (43) est constitué du côté du fond par le transporteur longitudinal précité (41) et dans la région oblique par un dispositif introducteur (45).

28. Dispositif selon la revendication 27, caractérisé en ce que le dispositif introducteur (45) est une chaîne (47) équipée d'entraîneurs (46) et qui circule à une vitesse inférieure à celle du transporteur longitudinal (41).

29. Dispositif selon la revendication 27 ou 28, caractérisé en ce que l'entraînement du dispositif introducteur (45) est assuré à partir de l'entraînement (54) du transporteur longitudinal (41) par l'intermédiaire d'un mécanisme de transmission compensateur intercalé (55).

30. Dispositif selon la revendication 29, caractérisé en ce que le mécanisme de transmission compensateur (55) est une transmission à chaîne disposée sur un bras oscillant (56) (figure 14).

31. Dispositif selon l'une des revendications 25 à 30, caractérisé en ce que le cadre de fenêtre (15) se tenant debout sur le transporteur longitudinal (41) est guidé entre deux parois latérales (57) formant une goulotte avec le transporteur longitudinal (41).

32. Dispositif selon l'une des revendications 25 à 31, caractérisé en ce que le transporteur longitudinal (41) présente deux chaînes sans fin (48) guidées parallèlement l'une à côté de l'autre avec une distance libre, et reliées l'une à l'autre par des cornières, dont les ailes (50) dressées verticalement constituent une grille réceptrice pour le cadre de fenêtre (15), tandis que les ailes (51) s'étendant dans le plan de transport horizontal constituent un fond de transporteur fermé.

33. Dispositif selon l'une des revendications 20 à 32, caractérisé par un agencement à l'intérieur d'un conteneur ou analogue pouvant être installé en tout endroit voulu.
